# EUROPÄISCHE PATENTSCHRIFT

(11) **EP 0 650 001 B1**
(45) Veröffentlichungstag und Bekanntmachung des Hinweises auf die Patenterteilung: **11.02.1998**
(21) Anmeldenummer: 94116441.0
(22) Anmeldetag: 19.10.1994
(51) Int. Cl.: F16H 63/42

(54) **Schaltstellungsanzeige für die Handschaltung eines Kraftfahrzeugwechselgetriebes**
Gear position indicator for manual control of gearbox
Dispositif indicateur de rapport pour commande manuelle de boîte de vitesses

(30) Priorität: 22.10.1993 DE 4336145
(43) Veröffentlichungstag der Anmeldung: 26.04.1995
(73) Patentinhaber: LEMFÖRDER METALLWAREN AG., D-49441 Lemförde (DE)
(72) Erfinder: Gross-Kohorst, Berthold, D-49393 Lohne (DE); Uetrecht, Uwe, D-32351 Stemwede-Dielingen (DE); Haver, Wolfgang, D-32351 Stemwede-Wehdem (DE)

(56) Entgegenhaltungen:
- DE-U- 8 902 383
- US-A- 4 964 359
- US-A- 4 991 535

## Beschreibung

Die Erfindung beschreibt eine Schaltstellungsanzeige für die Handschaltung eines Kraftfahrzeugwechselgetriebes der im einleitenden Teil des Patentanspruchs 1 angegebenen Art. Eine solche Schaltstellungsanzeige ist aus der US-A-4 964 359 bekannt, bei denen ein lichtleitendes Bauelement Schaltstellungssymbole permanent beleuchten. Diese Beleuchtung der Schaltstellungssymbole erfolgt indirekt durch ein Bauelement aus einem lichtleitenden Werkstoff. Das Licht wird also lediglich durch einen Lichtleiter über das genannte Bauelement in den Bereich der Anzeigesymbole geführt. Eine ähnliche Schaltstellungsanzeige geht aus der US-A-4 991 535 hervor.

Die Anzeige der vom Fahrzeuglenker gewählten Schaltstellung ist im Hinblick auf eine ökonomische Fahrweise Inhalt zahlreicher weiterer Publikationen. Aus der Schrift DE 39 29 268 -A1- geht beispielsweise eine Anzeige hervor, bei der auf einem Bildschirm der jeweils gewählte Gang und die rechnerunterstützte Empfehlung für den als nächstes einzulegenden Gang angezeigt werden.

Aus der Schrift DE 42 28 982 -C1- ist darüberhinaus eine Schaltstellungsanzeige bekannt, bei der Lichtleiter innerhalb eines hohl ausgebildeten Schalthebels verlegt sind. Diese enden direkt unterhalb einer lichtdurchlässigen Abdeckung im Knauf des Schalthebels und dienen dazu, das von dort einfallende Licht auf eine reflektierende Fläche zu leiten, auf der die Symbole des gewählten Getriebeganges dargestellt sind. Von der reflektierenden Fläche wird das Licht ebenfalls über Lichtleiter zu dem Anzeigefeld im Schalthebelknauf geleitet und stellt dort den Getriebegang als Symbol dar. Inhalt dieser Erfindung ist es auch, künstliches Licht zur Beleuchtung zu verwenden. Dieses kann von den Scheinwerfern des Kraftfahrzeuges herrühren.
Es sind darüberhinaus Schaltstellungsanzeigen bekannt, bei denen eine Glühlampe zur Ausleuchtung des gesamten Anzeigebereiches dient. Dabei nimmt die Leuchtstärke mit zunehmender Entfernung von der Glühlampe immer mehr ab, so daß eine gleichmäßige Ausleuchtung des Anzeigebereiches nicht erfolgt.

Der Erfindung liegt die Aufgabe zugrunde, eine Schaltstellungsanzeige zu entwickeln, die eine kostengünstige, leicht erkennbare Hervorhebung des vom Fahrzeuglenker gewählten Getriebeganges ermöglicht. Der Anzeigebereich sollte dabei permanent beleuchtet sein. Es sollte eine gleichmäßige Ausleuchtung des Anzeigebereiches erreicht werden.

Die Erfindung löst diese Aufgabe mit den kennzeichnenden Merkmalen des Patentanspruches 1.

Bei der vorgestellten Lösung wird der Anzeigebereich der Handschaltung ständig beleuchtet. Dies hat den Vorteil, daß der Fahrer nicht nur den gegenwärtig gewählten Gang schnell und einfach erkennen kann, sondern auch die Wege für einen neuen Schaltvorgang vorgezeichnet bekommt. Die lichtemittierenden Dioden werden für die vorgeschlagene Lösung wegen ihres monochromatischen, sehr gleichmäßig emittierten Lichtes bevorzugt. Der innerhalb des Gehäuses beweglich gelagerte Schalthebel tritt durch eine obere Abdeckung des Gehäuses in den Fahrgastraum des Kraftfahrzeuges aus. Diese Abdeckung enthält auch den Anzeigebereich, der sich in einem für den Fahrer gut sichtbaren Bereich befinden sollte. Der Anzeigebereich ist lichtdurchlässig und sollte vorteilhafter Weise aus Kunststoff gefertigt sein. Er weist die Symbole für die jeweiligen Getriebegänge auf. Diese sollten lichtundurchlässig sein. Als Symbole für die Anzeige des durch den Fahrer gewählten Getriebeganges können je nach Schaltungsart Buchstaben oder Ziffern dienen. Sie sind vorzugsweise auf dem Anzeigebereich angebracht, so beispielsweise durch farbliche Kennzeichnung. Eine aus dem Anzeigebereich herausgearbeitete Kontur mit nachträglicher farblicher Kennzeichnung ist ebenso denkbar und liegt innerhalb des Erfindungsgedankens. Der Anzeigebereich dient unterhalb der lichtundurchlässigen Abdeckung auch zur Aufnahme der Lichtquellen. Dabei umschließt der Anzeigebereich die lichtemittierenden Dioden teilweise, so daß er eine lichtleitende Funktion innerhalb des Werkstoffes übernimmt. Die lichtemittierenden Dioden werden also erfindungsgemäß nicht direkt unter den Gangsymbolen montiert. Auf diese Weise wird eine dauerhafte, diffuse Beleuchtung des gesamten Anzeigebereiches erreicht. Für jede Schaltstellung ist dabei eine separate lichtemittierende Diode vorgesehen, um das Anzeigefeld möglichst gleichmäßig auszuleuchten.
Der durch den Fahrer gewählte Getriebegang wird dadurch kenntlich gemacht, daß in dem Anzeigebereich das Gangsymbol verstärkt beleuchtet wird. Dies erreicht man erfindungsgemäß durch einen reflektierenden Hohlspiegel, der parallel zur Bewegung des Schalthebels geführt wird. Er reflektiert die von der Diode emittierten Lichtstrahlen unter einem solchen Winkel, daß das entsprechende Symbol von unten verstärkt durchleuchtet wird. Eine zusätzliche Lichtquelle ist dabei nicht notwendig. Das Licht der teilweise in den Anzeigebereich integrierten Dioden, das ansonsten ungenutzt bleibt, wird nun von dem Spiegel reflektiert. Die Montage des reflektierenden Hohlspiegels ist schaltungsabhängig. Sie kann erfindungsgemäß beispielsweise an einem seitlichen Arm am Schalthebel befestigt sein. Bei Automatikschaltungen ist eine Befestigung auf der mit dem Schalthebel bewegten Rolloabdeckung möglich.

Ein Ausführungsbeispiel der Erfindung wird nachstehend unter bezugnahme auf die Zeichnung näher erläutert. Es zeigt:
Figur 1:
den Teilschnitt durch eine Automatikschaltung.

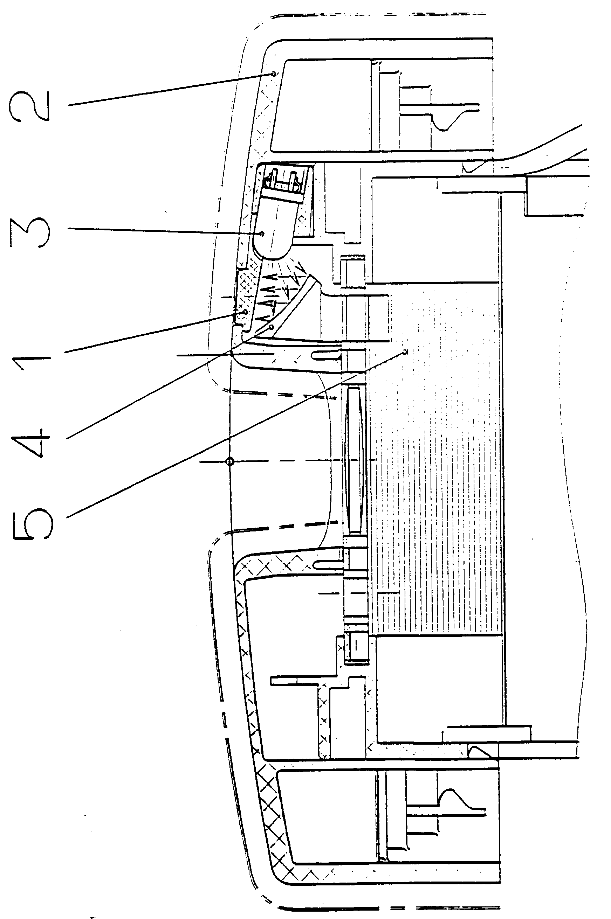

In Figur 1 ist eine Automatikschaltung ausschnittsweise gezeigt, bei der in die Abdeckung (2) des Schalthebelgehäuses ein lichtdurchlässiger Anzeigebereich (1) eingesetzt ist Dieser Anzeigebereich dient unterhalb der Abdeckung (2) gleichzeitig dazu, eine lichtemittierende Diode (3) teilweise überdeckend aufzunehmen. Ein Teil des von der Diode emittierten Lichtes wird durch den somit als Lichtleiter fungierenden Anzeigebereich dazu verwendet, eine permanent diffuse Ausleuchtung der Ganganzeige zu ermöglichen. Durch die teilweise Aufnahme der Diode in den Anzeigebereich wird auch nur ein Teil des Lichtes ausgenutzt. Der verbleibende Restl geht verloren. In der vorgestellten Ausführung wird der Anzeigebereich (1) aus milchig weißem Kunststoff hergestellt, sodaß eine diffuse und gleichmäßige Lichtausbreitung in dem Kunststoff unterstützt wird. Der Schaltthebel durchdringt die Abdeckung (2) in Richtung Fahrgastraum des Kraftfahrzeuges und wird dabei von einer als Sicht- und Schmutzschutz dienenden Rolloabdeckung (5) umgeben. Diese Rolloabdeckung (5) bewegt sich bei der Schaltbewegung mit Auf der Rolloabdeckung (5) wird ein lichtreflektierender Hohlspiegel (4) unterhalb der Abdeckung (2) befestigt. Dieser Hohlspiegel (4) wird mit der Rolloabdeckung mitbewegt und steht in jeder Gangposition direkt unter dem entsprechenden Symbol des Anzeigebereiches (1). Das normalerweise verloren gehende Licht der zugeordneten lichtemittierenden Diode (3) wird von dem Hohlspiegel (4) gesammelt und in Richtung Anzeigebereich (1) gespiegelt. Dadurch wird eine sichtliche Aufhellung des Gangsymbols erreicht.

### BEZEICHNUNGSLISTE

- 1: Anzeigebereich
- 2: Abdeckung
- 3: lichtemittierende Diode
- 4: lichtreflektierendes Bauteil
- 5: Rolloabdeckung

## Patentansprüche

1. Schaltstellungsanzeige für die Handschaltung eines Kraftfahrzeugwechselgetriebes mit:
- einem Schalthebel,
- einem Gehäuse,
- einer Kulisse in Form der Schaltgassen
- einer lichtundurchlässigen Abdeckung (2) in der ein die jeweilige Schaltstellung anzeigendes, lichtdurchlässiges und gleichzeitig lichtleitendes, dauerhaft diffus beleuchtetes Bauelement (1) mit Symbolen zur Anzeige des gewählten Getriebeganges angeordnet ist, wobei
- ein lichtreflektierendes Bauteil (4) eine zur Schalthebelbewegung synchrone Bewegung vollzieht und
in dem Bauelement (1) ein dem gewählten Getriebegang entsprechendes Symbol durch Lichtreflexion verstärkt aufgehellt hervorhebt, dadurch gekennzeichnet, daß das Bauelement (1) unterhalb der Abdeckung (2) für jede Schaltstellung eine separate Glühlampe, Glimmlampe oder lichtemittierende Diode (3) teilweise überdeckt aufnimmt und daß das Licht reflektierende Bauteil ein Licht sammeln der Hohlspiegel (4) ist.

## Claims

1. Gearshift-position indicator for the manual gearshift mechanism of a gear-change box of a motor vehicle with:
- a gearshift lever,
- a housing,
- a gate in the form of the gearshift channels,
- an opaque covering (2) within which a permanently diffusely-illuminated structural element (1) is arranged which indicates the particular gearshift position, which is translucent and at the same time light-conducting and which has symbols for indicating the selected transmission gear, whereby
- a light-reflecting component (4) executes a movement which is synchronous with the movement of the gearshift lever and within the structural element (1) a symbol corresponding to the selected transmission gear highlights said selected transmission gear in intensely brightened manner by reflection of light, characterised in that the structural element (1) accommodates, in partially masked manner below the covering (2) and for each gearshift position, a separate incandescent lamp, glow-discharge lamp or light-emitting diode (3), and in that the light-reflecting component is a light-collecting concave mirror (4).

## Revendications

1. Indicateur de position de changement de vitesse pour le changement de vitesse à main d'une boîte de vitesses pour véhicule automobile, comprenant :
- un levier de changement de vitesse,
- un boîtier,
- une coulisse se présentant sous forme du chemin de changement de vitesse,
- un capot (2) opaque dans lequel est disposé un élément (1) translucide et conduisant en même temps la lumière, qui indique chaque position de changement de vitesse et est éclairé en permanence d'une manière diffuse et qui comporte des symboles servant à indiquer le rapport de vitesses de boîte sélectionné,
- tandis qu'un élément (4) réfléchissant la lumière est animé d'un déplacement synchronisé avec le déplacement du levier de changement de vitesse et fait ressortir dans l'élément éclairé (1), sous une forme plus claire renforcée et par réflexion de la lumière, un symbole correspondant au rapport de vitesses de boîte sélectionné,
caractérisé en ce qu'au-dessous du cache (2) et pour chaque position de changement de vitesse, l'élément éclairé (1) sert à loger, en la recouvrant partiellement, une ampoule à filament, ampoule à décharge ou diode électroluminescente (3) séparée et en ce que l'élément réfléchissant la lumière est un miroir concave (4) recueillant la lumière.
